# EUROPEAN PATENT APPLICATION

(11) **EP 4 613 939 A1**
(43) Date of publication of application: **10.09.2025**
(21) Application number: 25162188.4
(22) Date of filing: 06.03.2025
(51) Int. Cl.: E02F 3/28, E02F 9/08, E02F 9/20, B66F 9/065, B66F 9/075

(54) **A WORKING MACHINE**

(30) Priority: 07.03.2024 GB 202403332
(71) Applicant: J.C. Bamford Excavators Limited, Uttoxeter Staffordshire ST14 5JP (GB)
(72) Inventor: DeBerry, Sam, ST14 5JP Uttoxeter (GB); Ireland, Jordan, ST14 5JP Uttoxeter (GB); Ingram, Scott, Uttoxeter, ST14 5JP (GB)
(74) Representative: McGeough, Gemma Ann

(57) **Abstract**

A working machine comprising: a machine body; a ground engaging propulsion structure supporting the machine body; a working arm pivotable relative to the machine body between raised and lowered positions; and an electrically powered prime mover arrangement configured to provide motive power to the ground engaging propulsion structure and/or the working arm. The machine body comprises: a working arm housing for receiving the working arm in its lowest position, the working arm housing comprising a sidewall; and an enclosure in which at least part of the prime mover arrangement is housed. Said at least part of the prime mover arrangement in the enclosure is adjacent the sidewall. The sidewall comprises an inlet aperture. The working machine is configured such that ambient air that passes through the inlet aperture, then passes over said at least part of the prime mover arrangement for cooling one or more electrical components thereof.

## Description

### FIELD

The present teachings relate to a working machine, and in particular to a working machine including an electrically powered prime mover arrangement.

### BACKGROUND

Working machines are typically diesel-powered. The diesel engines of such working machines are typically cooled via a liquid cooling system in which heat is transferred from the engine to a radiator via a liquid coolant. The heat is then transferred to ambient air flowing along a cooling path over the radiator. Ambient air may flow along the cooling path as a result of operation of a fan and/or movement of the working machine. Although less common, the engines of some working machines may be exclusively air cooled, where heat is transferred directly from the engine to ambient air flowing along a cooling path over the engine. Typically, water in the environment (e.g. ground surface water or precipitation) is free to enter such cooling paths, since internal combustion engines and radiators are generally impervious to water.

There is a drive in the industry to move towards hybrid or electric powered vehicles. Like diesel-powered engines, the prime mover arrangements (e.g. including electric motors) of electrically powered working machines require cooling so as to prevent overheating. However, such electrical components are required to be shielded from water contact to prevent water-related damage thereto (e.g. short circuiting, corrosion).

To shield them from contact with water, electrical components of such prime mover arrangements are typically housed within an enclosure, such as a pod mounted to the vehicle's chassis, and typically cooled via air passing over the exterior surface of the enclosure. However, for larger vehicle's requiring larger prime mover arrangements, such cooling may be insufficient to prevent electrical components of the prime mover arrangement from overheating.

The present teachings seek to overcome or at least mitigate one or more problems associated with the prior art.

### SUMMARY

The present teachings provide a working machine according to the appended claims.

An aspect of the teachings provides a working machine, e.g. a telehandler. The working machine may comprise a machine body. The working machine may comprise a ground engaging propulsion structure supporting the machine body. The working machine may comprise a working arm pivotable relative to the machine body between raised and lowered positions. The working machine may comprise an electrically powered prime mover arrangement configured to provide motive power to the ground engaging propulsion structure and/or the working arm. At least part of the prime mover arrangement may be housed within the machine body. A first external surface of the machine body may comprise an inlet aperture. The working machine may be configured such that ambient air that passes through the inlet aperture, then passes over said at least part of the prime mover arrangement for cooling one or more electrical components thereof. The first external surface may be configured so as to inhibit precipitation ingress to the cooling path via the inlet aperture.

Advantageously, such a configuration of the working machine helps to prevent overheating of the prime mover arrangement, and helps to inhibit precipitation from entering the enclosure and contacting the prime mover arrangement, which could lead to failure of the prime mover arrangement (e.g. via short circuiting).

The machine body may comprise a working arm housing for receiving the working arm in its lowest position. The working arm housing may comprise a sidewall. The machine body may comprise an enclosure in which said at least part of the prime mover arrangement is housed. Said at least part of the prime mover arrangement in the enclosure may be adjacent the sidewall. The sidewall may comprise the inlet aperture.

Providing the inlet aperture in the sidewall of the working arm housing, as opposed to a front facing wall of the machine body for example, helps to inhibit precipitation from entering the enclosure and contacting the prime mover arrangement.

The inlet aperture may extend through an external surface of the sidewall. An angle between normals of the external surface and a ground plane of the working machine may be in the range of 75 to 105 degrees.

Advantageously, such an orientation of the external surface may help to inhibit precipitation ingress to the cooling path since precipitation is inhibited from falling directly through the inlet aperture.

The external surface may be substantially perpendicular to the ground plane.

The sidewall may be substantially parallel to a forward travelling direction of the working machine and/or a longitudinal axis of the working arm.

Advantageously, such a configuration helps to improve the packaging of the working arm housing.

The sidewall may be substantially perpendicular to a ground plane of the working machine.

Advantageously, such a configuration helps to improve the packaging of the working arm housing.

The enclosure may project laterally from the sidewall with respect to a forward travelling direction of the working machine.

Advantageously, such a configuration helps to improve packaging of the prime mover arrangement.

The inlet aperture may be adjacent to, or below, the working arm when the working arm is in its lowest position.

Advantageously, such a configuration helps to improve packaging of the working machine.

The working arm may comprise an upper wall and a lower wall connected by two opposed arm sidewalls. The inlet aperture may be adjacent to, or below, one of the arm sidewalls when the working arm is in its lowest position.

The inlet aperture may comprise a grill for inhibiting debris ingress to the enclosure.

At least part of the enclosure may be mounted to the sidewall.

Advantageously, such a configuration helps to improve packaging and assembly of the working machine.

Said at least part of the prime mover arrangement may be mounted to the sidewall.

Advantageously, such a configuration helps to improve packaging of the prime mover arrangement. Moreover, the first wall may act as heat sink, helping to further cool the prime mover arrangement.

The working arm may further comprise a duct within the enclosure configured to direct ambient air that passes through the inlet aperture towards said at least part of the prime mover arrangement.

Advantageously, the duct helps to maximise airflow over the drive arrangement to maximise cooling thereof.

The enclosure may comprise a first outlet aperture. Ambient air that passes through the inlet aperture, may pass over said at least part of the prime mover arrangement, and then through the first outlet aperture.

Advantageously, such a configuration helps to reduce the length of the cooling path.

The first outlet aperture may comprise a grill for inhibiting debris ingress to the enclosure.

The first outlet aperture may extend through an external surface of the enclosure. An angle between normals of the external surface and a ground plane of the working machine may be in the range of 90 to 180 degrees.

Advantageously, such a configuration helps to inhibit precipitation ingress to the enclosure since precipitation is inhibited from falling directly through the outlet aperture and into the enclosure.

The first outlet aperture may extend through an external surface of the enclosure. An angle between a normal of the external surface and a forward travelling direction of the working machine may be in the range of 90 to 180 degrees.

Advantageously, such a configuration helps to inhibit precipitation ingress to the enclosure since the ambient air is required to change direction to enter the enclosure via the outlet aperture.

The enclosure may comprise a wheel housing for a ground engaging wheel of the ground engaging propulsion structure. The wheel housing may comprise the first outlet aperture.

Advantageously, such a configuration help to improve packaging of the working machine.

The first outlet aperture may face the ground engaging wheel. The working machine may comprise a barrier, such as a fender, interposed between the first outlet aperture and the ground engaging wheel for shielding the first outlet aperture from ground spray.

Advantageously, the barrier helps to prevent the ground engaging wheel spraying mud into the enclosure via the outlet aperture.

Ambient air that passes through the inlet aperture, over said at least part of the prime mover arrangement, and through the first outlet aperture, may travel along a substantially linear path.

Advantageously, such a linear path helps maximise airflow past the prime mover arrangement to maximise cooling thereof.

The working machine may further comprise a second outlet aperture in the machine body. The second outlet aperture may be spaced from the enclosure. Ambient air that passes through the inlet aperture, may then pass over at least part of the prime mover arrangement, and may then pass through the second outlet aperture.

Advantageously, such a configuration helps to maximise airflow over the prime mover arrangement for cooling thereof.

The sidewall may comprise an opening spaced from the inlet aperture. Ambient air that passes through the inlet aperture, may pass through said opening and may then pass through the second outlet aperture.

Advantageously, such a configuration helps to maximise airflow over the prime mover arrangement for cooling thereof.

Part of the prime mover arrangement (e.g. an electric motor) may extend through said opening.

Advantageously, such a configuration helps to improve packaging of the prime mover arrangement.

The working machine may further comprise at least one blower within the enclosure configured to force ambient air towards said at least part of the prime mover arrangement.

Advantageously, the blower may help to increase the flow of ambient air over the prime mover arrangement, increasing the cooling thereof.

The at least one blower may be adjacent the inlet aperture. The at least one blower may be selectively controllable so as to blow air out of the enclosure via the inlet aperture for blowing debris off a grill covering the inlet aperture.

Said at least part of the prime mover arrangement may comprise one or more inverters housed within an inverter housing. Ambient air that passes through the inlet aperture, may pass through the inverter housing for cooling the one or more inverters.

Said at least part of the prime mover arrangement may comprise at least one heatsink connected to at least one electrical component, such as an inverter. Ambient air that passes through the inlet aperture, may pass over said at least one heatsink.

Advantageously, the at least one heat sink may help to more efficiently cool the prime mover arrangement.

The prime mover arrangement may comprise at least two heatsinks, each connected to at least one electrical component of the prime mover arrangement. Said at least two heatsinks may be arranged in parallel with respect to a flow path of ambient air that passes through the inlet aperture, and over said at least part of the prime mover arrangement.

Advantageously, such a configuration of the at least two heat sinks may help to more efficiently cool the prime mover arrangement.

Ambient air that passes through the inlet aperture may cool one or more of the following electrical components of the prime mover arrangement: one or more inverters; one or more electric motors; one or more electric pumps; and one or more power distribution units.

The enclosure may comprise an access port for accessing the prime mover arrangement. The enclosure may comprise a hatch movable relative to the access port between open and closed positions for respectively opening and closing the access port. The hatch may inhibit precipitation ingress to the enclosure via the access port when in the closed position.

Advantageously, provision of the access port and hatch enables access to the prime mover arrangement for maintenance and inspection whilst inhibiting precipitation contacting the prime mover arrangement.

### BRIEF DESCRIPTION OF THE DRAWINGS

Embodiments are now disclosed by way of example only with reference to the drawings, in which:
Figures 1a shows an isometric view of a working machine according to an embodiment;
Figure 1b show a side view of the working machine of Figure 1;
Figure 2 shows a front isometric view of a prime mover arrangement and an enclosure of the working machine of Figure 1a;
Figure 3 shows a front isometric view of the prime mover arrangement of Figure 2 with the enclosure removed;
Figure 4 shows a further front isometric view of the prime mover arrangement of Figure 2 with the enclosure removed;
Figure 5a shows a front isometric view of the prime mover arrangement of Figure 3 with a duct cover removed;
Figure 5b shows a front isometric detail view of the prime mover arrangement of Figure 5a with an inverter cover removed;
Figure 6 is a topside plan view of the prime mover arrangement of Figure 5a;
Figure 7 is a rear isometric view of the prime mover arrangement and enclosure of Figure 2;
Figure 8 is a front isometric view of a chassis, motor and cab of the working machine of Figure 1a;
Figure 9 is an underside plan view of the chassis of Figure 8; and
Figure 10 shows a front isometric view of a prime mover arrangement and an enclosure of a working machine according to an embodiment.

### DETAILED DESCRIPTION OF EMBODIMENT(S)

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition.

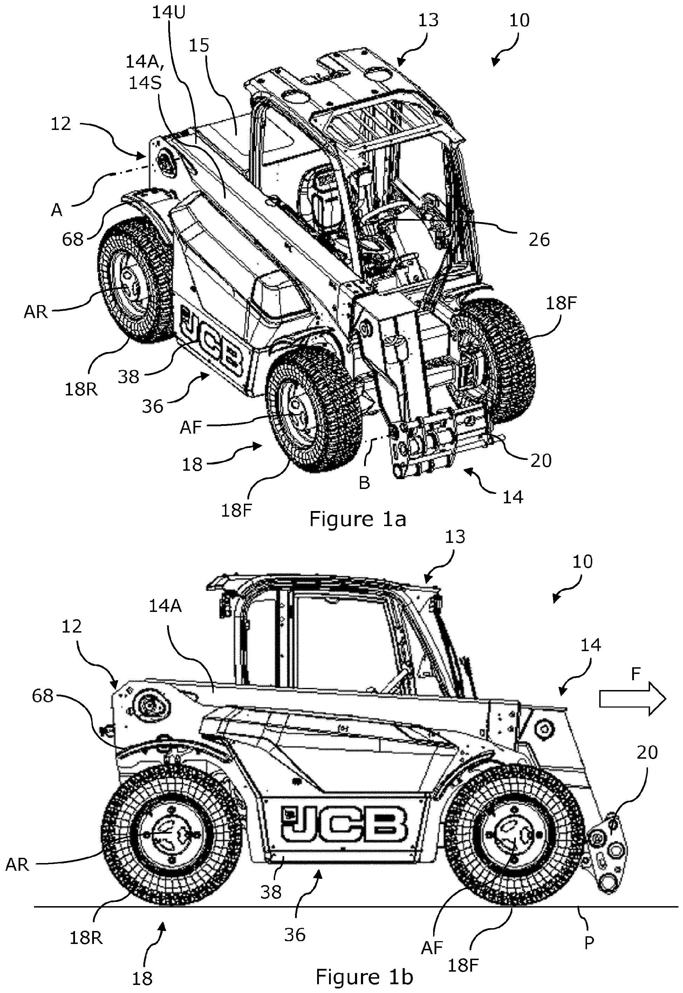

With reference to Figures 1a to 9 there is shown a working machine 10. In the illustrated embodiment, the working machine 10 is a telescopic handler (i.e. telehandler). In alternative embodiments (not shown), the working machine 10 may be any suitable working machine, such as a backhoe loader, a forklift truck, a wheeled loading shovel, a dumper, an excavator or a tractor, for example. Such working machines 10 are suitable for use in off-highway industries such as agriculture and construction. In these industries they are generally configured to perform tasks such as excavation, load handling, harvesting or planting crops.

The working machine 10 includes a machine body 12, an operator cab 13, a working implement assembly 14, and a ground engaging propulsion structure 18.

The working implement assembly 14 is configured to handle material. In the illustrated embodiment, the working implement assembly 14 includes a telescopic working arm 14A pivotably mounted at a first end to the body 12 for pivoting movement relative to the body 12 about a first generally horizontal axis A (represented as a dot-dash line in Figure 1a) between lowered and raised positions. The working arm 14A is configured to carry a load via a handling implement (not shown) at a distal second end opposite to the proximal first end. In the illustrated embodiment, the second end includes a tool carrier 20 (or a carriage) which is configured to attach to or comprises a working implement/work tool to the machine 10. The tool carrier 20 is configured to pivot relative to the working arm 14A about a second generally horizontal axis B (which may be referred to as a tilt axis B) so that a load may be kept in a constant horizontal or other chosen orientation as the working arm 14A pivots up and down, as well known in the art. In alternative embodiments, the working implement assembly 14 may include any suitable working implement (e.g. any suitable (e.g. non-telescopic) working arm).

The ground engaging propulsion structure 18 supports the body 12, and is configured to provide a tractive effort to propel the machine 10 over ground. The propulsion structure 18 of the example shown in the figures includes a front axle AF and a rear axle AR. A pair of front wheels 18F are coupled to the front axle AF, and a pair of rear wheels 18R are coupled to the rear axle AR. The wheels 18F, 18R may be configured to provide two wheel or four-wheel steering as also well known in the art. Either or both of the front and rear wheels 18F, 18R may be configured to turn relative to the body 12 under the influence of a steering device provided within the operator cab 13 to effect steering. In the illustrated embodiment, the steering device includes a steering wheel 26 in the operator cab 13, but may additionally or alternatively include any suitable device such as a joystick for example. In alternative embodiments, the ground engaging propulsion structure 18 may include a pair of endless tracks.

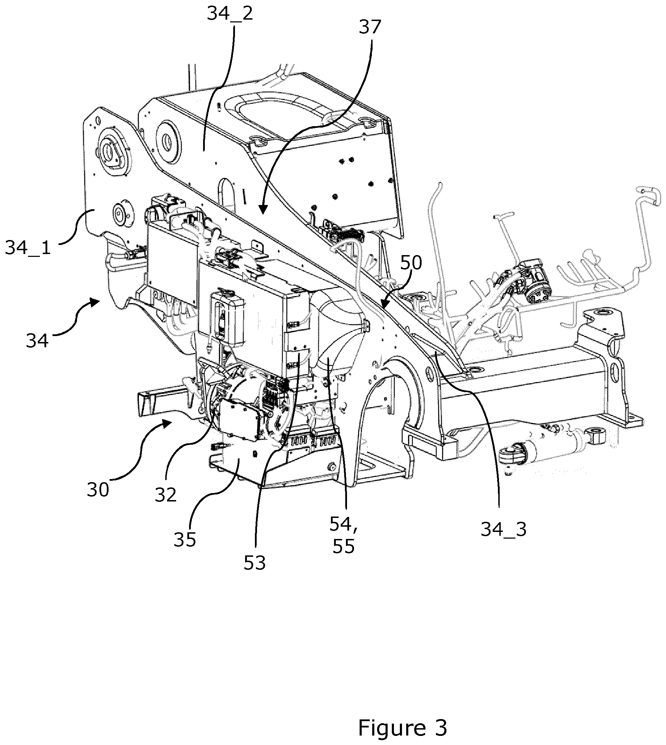

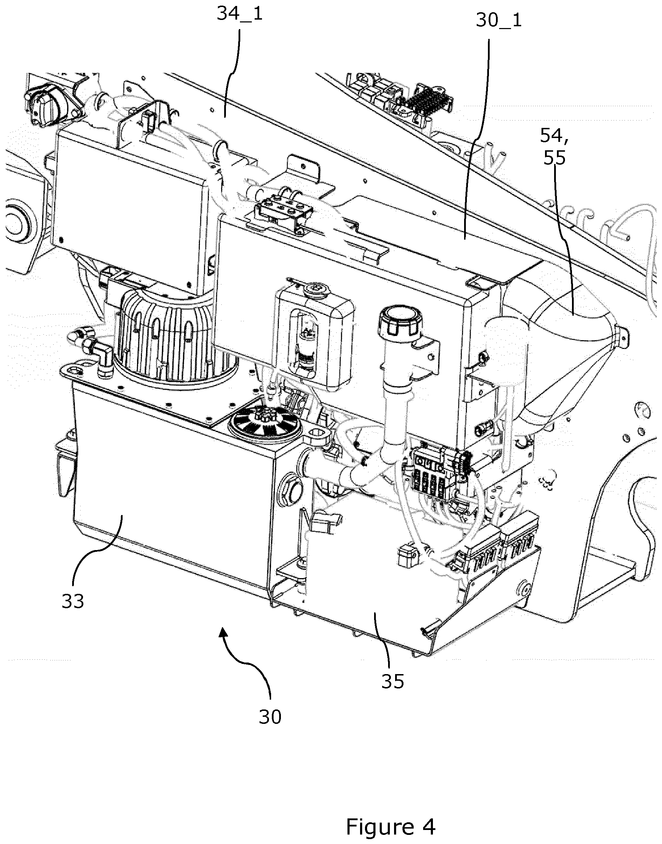

With reference to Figures 3 and 4, the working machine 10 includes an electrically powered prime mover arrangement 30 configured to provide motive power to the propulsion structure 18 and the working implement assembly 14. In the illustrated embodiment, the prime mover arrangement 30 includes an electric motor 32 for providing motive power to the propulsion structure 18, and an electric pump 33 for providing motive power to the working implement assembly 14. The electric pump 33 may include an electric motor (e.g. for rotating an impeller of the pump) separate to the electric motor 32.

In the illustrated embodiment, both of the axles AF, AR are coupled to the electric motor 32 via a transmission so as to drive movement of the ground engaging propulsion structure 18 (i.e. the axles AF, AR). The machine 10 of this embodiment is thus four wheel drive. The electric motor 32 causes movement of the working machine 10 over a ground surface. In alternative embodiments, only one of the axles AF, AR may be coupled to the electric motor 32 (i.e. the machine 10 may be two wheel drive).

In the illustrated embodiment, the prime mover arrangement 30 includes a single electric motor 32, but in alternative embodiments may include more than one electric motor (e.g. each wheel of the propulsion structure 18 may be driven by one or more dedicated electric motors). In some embodiments, the prime mover arrangement 30 may include a hybrid including both an internal combustion engine and an electric motor for providing motive power to the propulsion structure 18.

In the illustrated embodiment, the transmission includes a "dropbox" or gear train by which power is transferred from the electric motor 32 to the propulsion structure 18.

In the illustrated embodiment, the electric pump 33 provides motive power to the working implement assembly 14 to raise and lower the working arm 14A and pivot the tool carrier 20 via a hydraulic actuation system. The electric pump 33 is configured to supply pressurised hydraulic fluid to the hydraulic actuation system for moving the working implement assembly 14. In alternative embodiments (not shown), the prime mover arrangement 30 may additionally or alternatively include a different electrically powered prime mover for moving the working implement assembly 14, such as one or more electric motors. In some embodiments, the propulsion structure 18 and the working implement assembly 14 may be driven via a single common electric pump or motor.

In alternative embodiments (not shown), the prime mover arrangement 30 may provide motive power to only one of the propulsion structure 18 and working implement assembly 14.

The working machine 10 includes an electric energy storage arrangement (e.g. including one or more batteries) (not shown) for powering the prime mover arrangement 30. In the illustrated embodiment, the electric energy storage arrangement is housed within a portion 15 of the body 12 aft of the cab 13 (see Figure 1a). In alternative embodiments, the electric energy storage arrangement may be located in any suitable portion of the body 12 (e.g. within the enclosure 36 outlined below).

The body 12 includes a chassis 34 which provides the main structural support for the working machine 10. The chassis 34 may include structural support for the propulsion structure 18, the prime mover arrangement 30, the operator cab 13, the working implement assembly 14 and associated actuators, and any ancillary equipment, components, systems or body work as may be required for the machine 10 to function. The operator cab 13 is mounted to the chassis 34.

In the illustrated embodiment, the chassis 34 includes a working arm housing 37 having a first or outer sidewall 34_1, a second or inner sidewall 34_2, and a base wall 34_3. The working arm 14A is received in the working arm housing 37 when the working arm 14A is in its lowest position. At least part of the prime mover arrangement 30 is adjacent the outer sidewall 34_1.

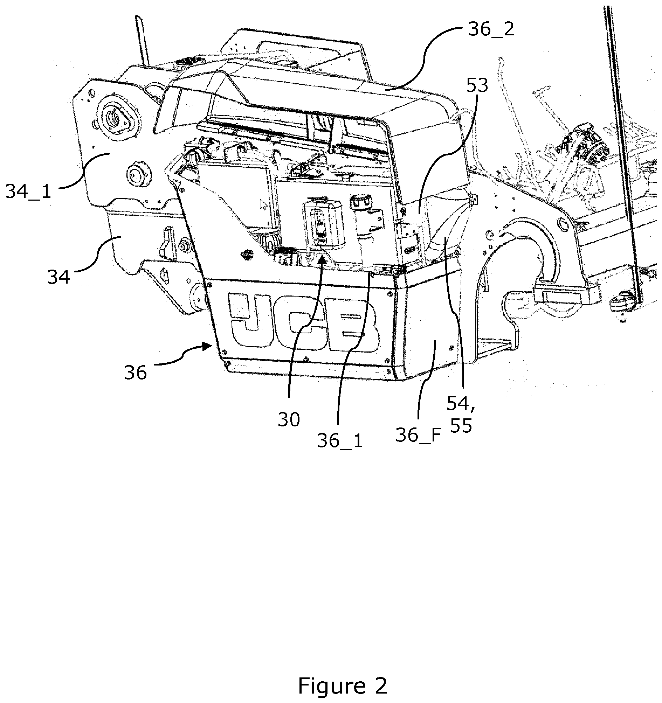

With reference to Figure 2, the body 12 includes an enclosure 36 mounted to the chassis 34. At least part of the prime mover arrangement 30 is housed in the enclosure 36. The enclosure 36 helps to protect the prime mover arrangement 30 from external damage, and shields the prime mover arrangement 30 from precipitation. In the illustrated embodiment, the enclosure 36 is configured to inhibit precipitation ingress within the enclosure 36. Advantageously, this helps to inhibit water contacting electrical components of the prime mover arrangement 30, which could lead to damage occurring to the prime mover arrangement 30 (e.g. short circuiting and/or corrosion).

In the illustrated embodiment, the enclosure 36 is in the form of a pod projecting from a lateral side of the chassis 34. The cab 13 is offset to one lateral side of a forward-aft centreline of the body 12. The enclosure 36 projects from the opposite (i.e. non-cab) lateral side of the chassis 34. The enclosure 36 is interposed between the front and rear wheels 18F, 18R on said lateral side of the chassis 34. In alternative embodiments, the enclosure 36 may have any suitable positioning on the working machine 10.

In the illustrated embodiment, the enclosure 36 includes an outer shell 38 mounted to the outer sidewall 34_1, such that the outer shell 38 and the outer sidewall 34_1 define the enclosure 36. The enclosure 36 projects laterally from the outer sidewall 34_1 (i.e. in a direction generally transverse to a forward travelling direction F of the working machine 10). The outer sidewall 34_1 is interposed between the enclosure 36 and the working arm 14A when in its lowest position as shown in Figures 1a and 1b.

The enclosure 36 includes an access port 36_1, and a hatch 36_2 movable relative to the access port 36_1 between open and closed positions for respectively opening and closing the access port 36_1. The prime mover arrangement 30 is accessible via the access port 36_1 (e.g. for inspection and maintenance) when the hatch 36_2 is in the open position. The hatch 36_2 inhibits precipitation ingress to the enclosure 36 via the access port 36_1 when in the closed position.

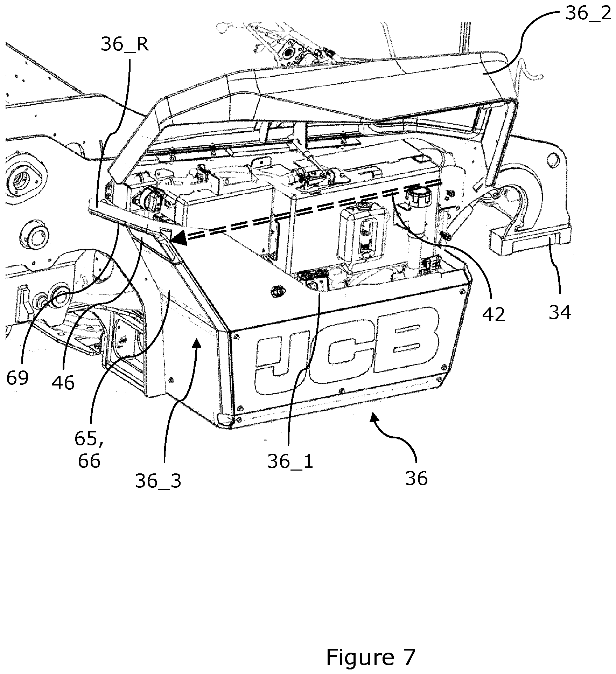

In the illustrated embodiment, an upwardly facing outer surface of the enclosure 36 includes the access port 36_1. The hatch 36_2 is positioned above the access port 36_1. The hatch 36_2 is pivotable relative to the access port 36_1 between open and closed positions. In the open position, the hatch 36_2 extends over at least part of the prime mover arrangement 30, so as to shield it from precipitation as shown in Figures 2 and 7.

The enclosure 36 may include a seal member (e.g. formed from a flexible polymeric material) configured to form a seal between the access portion 36_1 and the hatch 36_2 when the hatch 36_2 is in closed position. For example, the seal member may be mounted around the upwardly facing outer surface of the enclosure 36.

The prime mover arrangement 30 may include a number of electrical components for supplying power to and/or controlling the motor 32 and electric pump 33. In the illustrated embodiment, the prime mover arrangement 30 includes the electric energy storage arrangement, and an inverter arrangement 30_1 including one or more power inverters. The inverter arrangement 30_1 converts direct current supplied from the electric energy storage arrangement to alternating current for supply to the motor 32 and the pump 33.

In the illustrated embodiment, the electric motor 32, the electric pump 33, and the inverter arrangement 30_1 are at least partially housed within the enclosure 36.

It will be appreciated that, during operation of the working machine 10, waste heat generated by the electrical components of the prime mover arrangement 30 will cause their temperature to increase. To prevent electrical components of the prime mover arrangement 30 from overheating, the working machine 10 includes a cooling system 40 for cooling said electrical components.

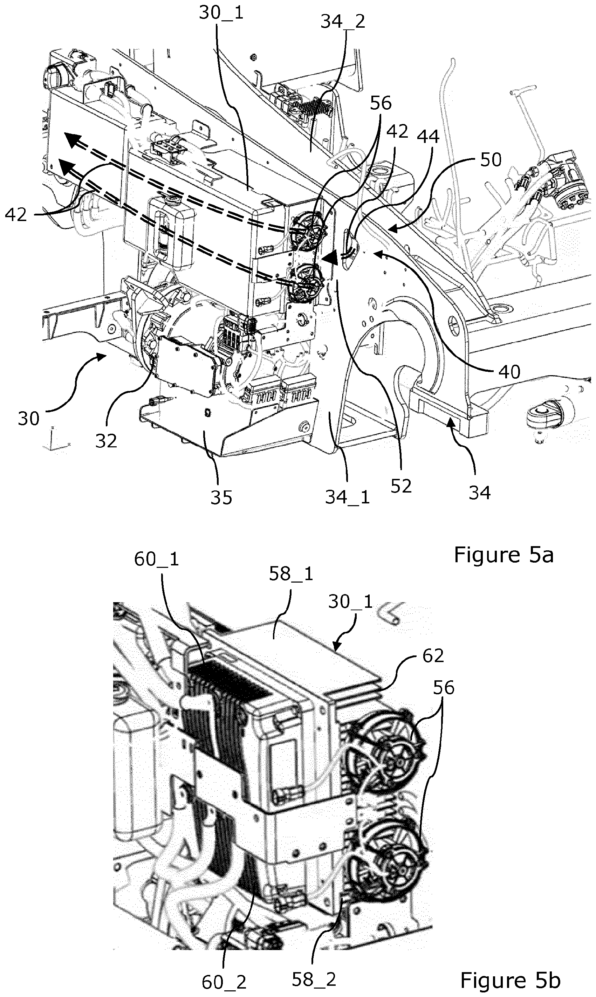

With reference to Figures 5a to 7, the cooling system 40 includes a cooling path 42 (represented by dashed double line arrows in Figures 5a, 6 and 7) for transporting ambient air over at least part of the prime mover arrangement 30 for cooling one or more electrical components thereof. The cooling path 42 passes from an inlet aperture 44 in a first external surface of the body 12, over part of the prime mover arrangement 30 (hereinafter "the cooled part of the prime mover arrangement"), and then through an outlet aperture 46 in a second external surface of the body 12. Advantageously, the cooling path 42 helps to prevent overheating of the prime mover arrangement 30.

In the illustrated embodiment, the inlet aperture 44 has a substantially triangular profile, but may have any suitable shape in alternative embodiments.

In the illustrated embodiment, the cooling path 42 passes through the enclosure 36. To prevent water contacting electrical components of the prime mover arrangement 30, the cooling path 42 is configured to inhibit precipitation ingress to the cooling path 42, and thus to the enclosure 36.

In the illustrated embodiment, the outer sidewall 34_1 includes the inlet aperture 44. The inlet aperture 44 passes through the outer sidewall 34_1 from an external surface 50 thereof to an internal surface 52 thereof. Although not visible in the figures, it will be appreciated that the external surface 50 faces the inner sidewall 34_2. By "external surface" it is intended to mean a surface on the exterior of the working machine 10, which is exposed to the external environment. By "internal surface" it is intended to mean a surface on the interior of the working machine 10, which is shielded from the external environment. The internal surface 52 is within the enclosure 36, and thus on the interior of the working machine 10. In the following, the wording "the external surface 50" shall refer to the external surface of the working machine 10 immediately surrounding the inlet aperture 44.

In the illustrated embodiment, the outer sidewall 34_1 is formed as a (e.g. metal) plate, and is thus substantially planar. In alternative embodiments (not shown), any suitable planar or non-planar wall may include the inlet aperture 44.

In the illustrated embodiment, the outer sidewall 34_1 is a longitudinal wall (i.e. it is substantially parallel to the forward travelling direction F and/or a longitudinal axis of the working arm 14A).

In the illustrated embodiment, the outer sidewall 34_1 is substantially perpendicular to a ground plane of the working machine 10.

In the illustrated the inlet aperture 44 is adjacent the working arm 14A in its lowest position. A gap between the working arm 14A and the inlet aperture 44 in its lowest position enables ambient air to flow from outside of the working machine 10 into the cooling path 42 via the inlet aperture 44. In alternative embodiments (not shown), the inlet aperture 44 may be below the working arm 14A when the working arm 14A is in its lowest position.

In the illustrated embodiment, the working arm 14A includes an upper wall 14U (see Figure 1a) and an opposite lower wall (not visible in the figures) connected by two opposed arm sidewalls 14S (only one of which is shown in Figure 1a). The inlet aperture 44 is adjacent to, or below, one of the arm sidewalls 14S when the working arm 14A is in its lowest position.

In the illustrated embodiment, the electric motor 32, and the inverter arrangement 30_1 are mounted to the outer sidewall 34_1. The outer sidewall 34_1 may thus act as a heat sink for these components, helping to further cool the prime mover arrangement 30.

The external surface 50 of the outer sidewall 34_1 is configured so as to inhibit precipitation ingress to the cooling path 42 via the inlet aperture 44. Advantageously, such a configuration of the external surface 50 helps to enable air to flow along the cooling path 42 so as to prevent overheating of the prime mover arrangement 30, whilst inhibiting water from contacting electrical components of the prime mover arrangement 30.

In the illustrated embodiment, the external surface 50 including the inlet aperture 44 is substantially perpendicular to a horizontal ground plane P of the working machine 10, i.e. a normal (i.e. normal line or vector) of the external surface 50 is substantially perpendicular to a normal of the ground plane P. Precipitation is thus inhibited from falling directly through the inlet aperture 44 and into the cooling path 42. In alternative embodiments, an angle between normals of the external surface 50 including the inlet aperture 44 and the ground plane P may be in the range of 75 to 105 degrees.

In alternative embodiments (not shown), the external surface 50 may include a canopy arranged above the inlet aperture 44 so as to inhibit precipitation ingress to the cooling path 42 via the inlet aperture 44.

The external surface 50 is configured so as to divert ambient air prior to entering the cooling path 42 via the inlet aperture 44. Advantageously, such diverting of the ambient air may help to inhibit water entrained with the ambient air from entering the cooling path 42 via the inlet aperture 44.

In the illustrated embodiment, the external surface 50 is substantially parallel to a forward travelling direction F of the working machine 10, i.e. the normal of the external surface 50 is substantially perpendicular to the forward travelling direction F. When the working machine 10 is travelling over ground in the forward travelling direction F, air travelling over the working machine 10 in a direction opposite to the forward travelling direction F (in a reference frame fixed to the working machine 10) is thus necessarily diverted prior to entering the cooling path 42 via the inlet aperture 44. In alternative embodiments, an angle between the normal of the external surface 50 including the inlet aperture 44 and the forward travelling direction F may be in the range of 90 to 180 degrees (i.e. such that the external surface 50 may face away from the forward travelling direction F).

In alternative embodiments (not shown), the external surface 50 may include a baffle arrangement configured so as to divert ambient air prior to entering the cooling path 42 via the inlet aperture 44.

With reference to Figures 2 to 4, the cooling system 40 includes a duct 54 within the enclosure 36 configured to direct ambient air entering the cooling path 42 via the inlet aperture 44, towards the cooled part of the prime mover arrangement 30. The cooling path 44 passes through the duct 54. In the illustrated embodiment, the duct 54 is formed between the outer sidewall 34_1 and a duct cover 55 mounted to the outer sidewall 34_1 (e.g. via one or more fasteners, bonding and/or welding). The ambient air is directed towards the cooled part of the prime mover arrangement 30 by a smooth and continuous surface of the cover 55 so as to inhibit stagnation points from forming in the cooling path 42.

A lower portion of the cover 55 may include a drain for draining water that has entered the duct 54 via the inlet aperture 44.

The duct 54 separates a portion of the cooling path 42 upstream of the cooled part of the prime mover arrangement 30 from the remainder of the enclosure 36. This helps to increase the flow of ambient air passing over the cooled part of the prime mover arrangement 30. In the illustrated embodiment, said upstream portion of the cooling path 42 extends from the inlet aperture 44 to the cooled part of the prime mover arrangement 30.

Turning again to Figures 5a and 5b, the cooling system 40 includes at least one blower configured to force ambient air along the cooling path 42 from the inlet aperture 44 towards the cooled part of the prime mover arrangement 30. The at least one blower helps to increase the flow of ambient air over the cooled part of the prime mover arrangement 30. In the illustrated embodiment, the at least one blower includes two electric fans 56. In alternative embodiments (not shown), the cooling system 40 may include only one, more than two, or no fans. In alternative embodiments (not shown), the cooing system 40 may include any suitable blower for forcing ambient air along the cooling path 42 from the inlet aperture 44 to the cooled part of the prime mover arrangement 30, other than a fan, such as a (e.g. electric) pump.

In the illustrated embodiment, the inverter arrangement 30_1 includes a first inverter 60_1 for supplying alternating current to the motor 32, and a second inverter 60_2 for supplying alternating current to the pump 33. In alternative embodiments (not shown), the inverter arrangement 30_1 may include only one or more than two inverters.

The inverter arrangement 30_1 includes a first heatsink 58_1 connected to the first inverter 60_1, and a second heatsink 58_2 connected to the second inverter 60_2. A major face of each inverter 60_1, 60_2 is in contact with the respective heatsink 58_1, 58_2 so as to increase heat transfer from the inverters 60_1, 60_2 to the heatsinks 58_1, 58_2. The cooling path 42 passes over the heatsinks 58_1, 58_2 so as to transfer heat from the heatsinks 58_1, 58_2 to the ambient air flowing along the cooling path 42. Such an arrangement helps to more efficiently cool the inverters 60_1, 60_2.

In the illustrated embodiment, each heatsink 58_1, 58_2 is formed from a (e.g. metal) material having a high thermal conductivity, and includes a plurality of fins 62 for increasing the contact surface area with ambient air flowing along the cooling path 42.

In alternative embodiments (not shown), the prime mover arrangement 30 may include only one, more than two, or no heatsinks. In some embodiments, one or more heatsinks may be connected to any suitable electrical component(s) of the prime mover arrangement 30.

In the illustrated embodiment, the heatsinks 58_1, 58_2 are arranged in parallel with respect to the cooling path 42 (i.e. the ambient air flowing along the cooling path 42 passes over the heatsinks 58_1, 58_2 in parallel rather than sequentially). This arrangement helps to cool the heatsinks 58_1, 58_2 more efficiently. In alternative embodiments (not shown), the heatsinks 58_1, 58_2 may be arranged at least partially in series.

In the illustrated embodiment, each fan 56 is upstream of one of the heatsinks 58_1, 58_2, which helps to increase the flow of ambient air over the heatsinks 58_1, 58_2, so as to increase the cooling thereof. In alternative embodiments, the fans 56 may have any suitable arrangement. For example, at least one of the fans 56 may be downstream of one or both of the heatsinks 58_1, 58_2.

In the illustrated embodiment, the inverter arrangement 30_1 is housed within an inverter housing 53. The cooling path 42 passes through the inverter housing 53 for cooling the inverters 60_1, 60_2 via cooling of the heatsinks 58_1, 58_2.

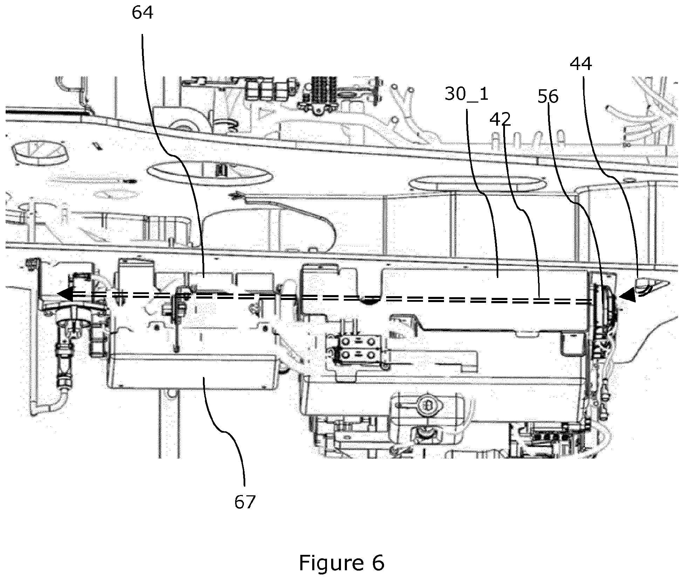

With reference to Figure 6 and 7, downstream of the heatsinks 58_1, 58_2, the cooling path 42 passes over a voltage converter arrangement 64 and a power distribution unit 67, and then passes through the outlet aperture 46. The cooling system 40 may thus also cool other electrical components of the working machine 10 such as the voltage converter arrangement 64. The voltage converter arrangement 64 and power distribution unit 67 are arranged in parallel with respect to the cooling path 42, but may be arranged at least partially in series in alternative embodiments.

The voltage converter arrangement 64 converts direct current from the electric energy storage arrangement to one or more different voltages required by different electrical components of the working machine 10. In the illustrated embodiment, the voltage converter arrangement 64 charges a 12 volt battery 35, which powers one or more 12 volt electrical systems (e.g. lighting) of the working machine 10. The 12 volt battery 35 is housed within the enclosure 36.

In the illustrated embodiment, the cooling path 42 is substantially linear (i.e. extends along a substantially straight line), which helps to maximise airflow over the cooled part of the prime mover arrangement 30. In alternative embodiments (not shown), the cooling path 42 may be non-linear (e.g. may include one or more bends).

In the illustrated embodiment, the enclosure 36 includes the outlet aperture 46. In particular, a rear portion of the enclosure 36 forms a wheel housing 36_2 for one of the rear wheels 18R, and the wheel housing 36_1 includes the outlet aperture 46. The outlet aperture 46 passes through a wall 65 of the enclosure 36 from an internal surface thereof (not shown) to an external surface 66 thereof. In the following, the wording "the external surface 66" shall refer to the external surface of the working machine 10 immediately surrounding the outlet aperture 46.

In the illustrated embodiment, the outlet aperture 46 faces the rear wheel 18_R. As shown in Figures 1a and 1b, to shield the outlet aperture 46 from ground spray churned up by the rear wheel 18_R, the working machine 10 includes a barrier 68, such as a fender, interposed between the outlet aperture 46 and the rear wheel 18_R.

The external surface 66 including the outlet aperture 46 is configured so as to inhibit precipitation ingress to the cooling path 42 via the outlet aperture 46. In the illustrated embodiment, an angle between normals of the external surface 66 and the ground plane P is in the range of 90 to 180 degrees, such that the external surface 66 faces towards the ground plane P of the working machine 10. Precipitation is thus unable to fall directly through the outlet aperture 46 and into the cooling path 42. In alternative embodiments (not shown), the external surface 66 may be substantially perpendicular to the ground plane P, like the external surface 50 which includes the inlet aperture 44.

In the illustrated embodiment, the external surface 66 includes a canopy 69 arranged above the outlet aperture 46 so as to inhibit precipitation ingress to the cooling path 42 via the outlet aperture 46.

The external surface 66 including the outlet aperture 46 is configured so as to inhibit ambient air which is flowing over the working machine 10 from entering the cooling path 42 via the outlet aperture 46, when the working machine 10 is travelling in the forward travelling direction F. In the illustrated embodiment, an angle between the normal of the external surface 66 and the forward travelling direction F is in the range of 90 to 180 degrees, such that the external surface 66 faces away from the forward travelling direction F. Air travelling over the working machine 10 in a direction opposite to the forward travelling direction F (in a reference frame fixed to the working machine 10) is thus inhibited from entering the cooling path 42 via the outlet aperture 46. In alternative embodiments (not shown), the external surface 66 including the outlet aperture 46 may be substantially parallel to the forward travelling direction F, like the external surface 50 including the inlet aperture 44.

In alternative embodiments (not shown), the external surface 66 may include a baffle arrangement configured to inhibit ambient air which is flowing over the working machine 10 from entering the cooling path 42 via the outlet aperture 46.

The inlet aperture 44 is located forward of the outlet aperture 46 with respect to the forward travelling direction F of the working machine 10. Such an arrangement of the inlet and outlet apertures 44, 46 inhibits warmed air exiting the outlet aperture 46 from entering the inlet aperture 44, and thus helps to more efficiently cool the prime mover arrangement 30. In the illustrated embodiment, the inlet aperture 44 is at or towards a forward end 36_F of the enclosure 36, and the outlet aperture 46 is at or towards a rear end 36_R of the enclosure 36.

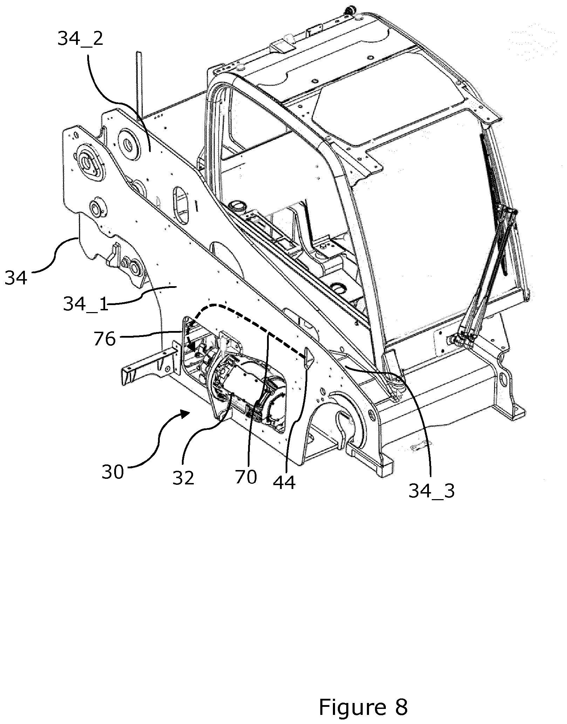

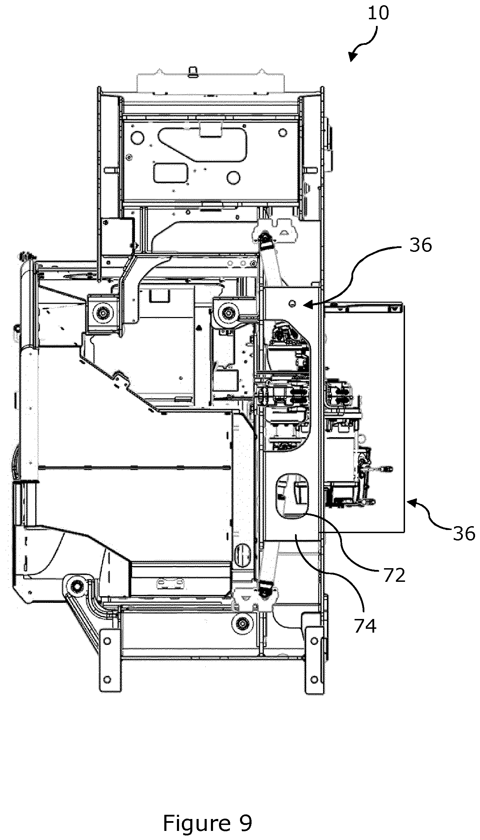

With reference to Figures 8 and 9, the cooling system 40 of the illustrated embodiment includes a further cooling path 70 (represented by a dashed line in Figure 8) for transporting ambient air over at least a further part of the prime mover arrangement 30 (relative to the cooling path 40), for cooling one or more electrical components thereof. The further cooling path 70 passes from the inlet aperture 44, over the further cooled part of the prime mover arrangement 30, and through a second outlet aperture 72 in an external surface 74 of the body 12. The second outlet aperture 72 is spaced from the enclosure 36. Provision of the further cooling path 70 helps to maximise airflow over the prime mover arrangement 30 for cooling thereof, as well as help cool a greater proportion of the prime mover arrangement 30.

In the illustrated embodiment, the further cooling path 70 passes over the inverter arrangement 30_1, the pump 33 and the motor 32, but may pass over any electrical component(s) of the prime mover arrangement 30 in alternative embodiments.

In the illustrated embodiment, the outer sidewall 34_1 includes an opening 76 spaced from the inlet aperture 44. The further cooling path 70 passes from the enclosure 36, through the opening 76 and then through the second outlet aperture 72.

In the illustrated embodiment, the motor 32 extends through the opening 76, which helps to improve packaging of the prime mover arrangement 30. In alternative embodiments (not shown), other components of the prime mover arrangement 30 (e.g. the pump 33) may additionally or alternatively extend through the opening 76.

In the illustrated embodiment, an underside of the chassis 34 includes the second outlet aperture 72. In alternative embodiments (not shown), any suitable portion of the body 12 may include the second outlet aperture 72.

In alternative embodiments (not shown), the working machine 10 may include only one of the cooling path 42 and the cooling path 70.

In some embodiments, the working machine 10 may be configured such that ambient air travelling along the cooling path 40 and/or the further cooling path 70 cools one or more of the following electrical components of the prime mover arrangement 30: one or more inverters 60_1, 60_2; one or more electric motors 32; and one or more electric pumps 33.

The inlet aperture 44 and/or outlet aperture 46 may be at least partially covered by a grill to inhibiting the ingress of debris, dust and dirt to the enclosure 36.

To inhibit dust and debris from blocking such a grill, the working machine 10 may be configured to selectively control the fans 56 so as to blow air out of the enclosure 36 via the inlet aperture 44 for blowing dust or debris off the grill. In such embodiments, at least one of the fans 56 may be adjacent the inlet aperture 44.

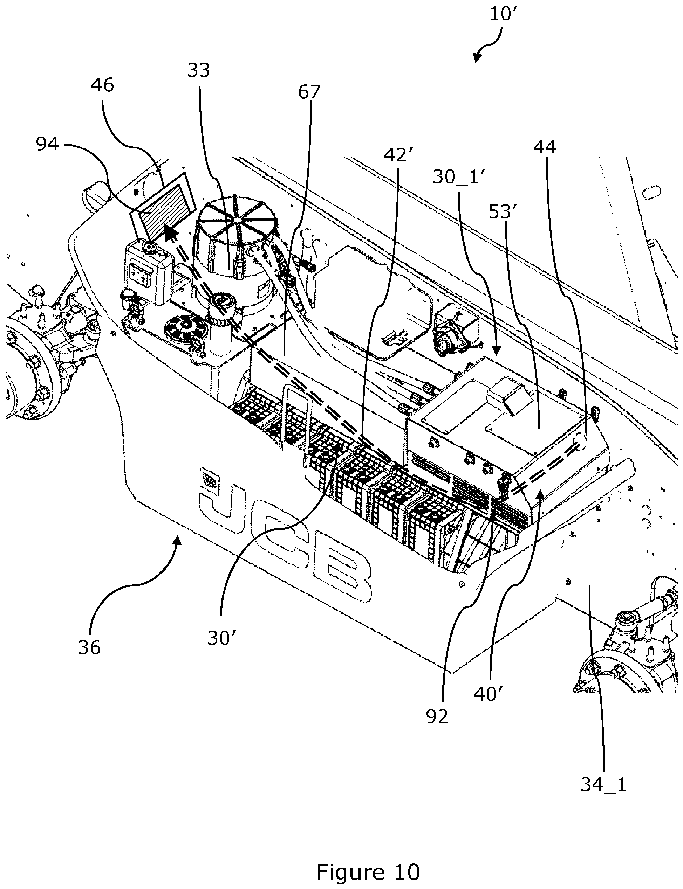

Figure 10 shows part of a working machine 10' according to a further embodiment. Features in common with the embodiment shown in Figures 1 to 9 share common reference numerals, and a discussion of these features will not be repeated for brevity. Unless stated otherwise, the working machine 10' shown in Figure 10 may share any of the features described in relation to the working machine 10 shown in Figures 1 to 9.

The working machine 10' includes an electrically powered prime mover arrangement 30' having a different arrangement to the powered prime mover arrangement 30 of the previous embodiment. The working machine 10' is larger than the working machine 10 of the previous embodiment. As such, components of the prime mover arrangement 30' are larger relative to the previous embodiment, and are arranged differently so as to improve their packaging.

The prime mover arrangement 30' includes an inverter arrangement 30_1' including one or more heatsinks (not shown), each connected to an inverter (not shown) of the inverter arrangement 30_1'. The inverter arrangement 30_1' includes an inverter housing 53' housing the one or more heatsinks. One or more inverters of the inverter arrangement 30_1' may also be housed within the inverter housing 53'.

The working machine 10' has a cooling system 40' including a cooling path 42' (represented by dashed double line arrows in Figure 10) for transporting ambient air over at least part of the prime mover arrangement 30' for cooling thereof. Initially, the cooling path 42' passes from the inlet aperture 44 (shown in phantom in Figure 10) in a substantially lateral direction (with respect to the forward traveling direction F) into the inverter housing 53' via one or more inverter housing inlets (not shown) adjacent the inlet aperture 44, then over the one or more heatsinks housed therein, and then out of the inverter housing 53' via one or more inverter housing outlets 92. As such, the inverter housing 53' acts as a duct within the enclosure 36, directing the cooling path 42' in a lateral direction from the inlet aperture 44. The outer shell of the enclosure 36 then forces the cooling path 42' exiting the one or more inverter housing outlets 92 to change direction towards the outlet aperture 46, from which the cooling path 42' exits the enclosure 36. Such an arrangement of the cooling path 42' enables a greater volume of air to flow over the one or more inverter heatsinks, helping to improve cooling thereof.

The working machine 10' includes a heat exchanger 94 within the enclosure 36 and adjacent the outlet aperture 46. The cooling path 42' passes over the heat exchanger 94 before exiting the enclosure 36 via the outlet aperture 46. The heat exchanger 94 is configured to cool hydraulic fluid of a hydraulic system of the working machine 10' (e.g. for operating the working arm 14A). Hydraulic fluid is pumped through the heat exchanger 94, and cooled via the cooling path 42'.

The heat exchanger 94 includes a fan (not shown) configured to force air along the cooling path 42' and through the outlet aperture 46. In alternative embodiments (not shown), the working machine 10' may include one or more fans (or any suitable blower) adjacent the outlet aperture 46, even when the heat exchanger 94 is not provided or located elsewhere.

Unless stated otherwise, the working machine 10 shown in Figures 1 to 9 may share any of the features described in relation to the working machine 10' shown in Figure 10.

The one or more embodiments are described above by way of example only and it will be appreciated that the variations are possible without departing from the scope of protection afforded by the appended claims.

## Claims

1. A working machine comprising:
a machine body;
a ground engaging propulsion structure supporting the machine body;
a working arm pivotable relative to the machine body between raised and lowered positions; and
an electrically powered prime mover arrangement configured to provide motive power to the ground engaging propulsion structure and/or the working arm,
wherein the machine body comprises:
a working arm housing for receiving the working arm in its lowest position, the working arm housing comprising a sidewall; and
an enclosure in which at least part of the prime mover arrangement is housed,
wherein said at least part of the prime mover arrangement in the enclosure is adjacent the sidewall,
wherein the sidewall comprises an inlet aperture, and
wherein the working machine is configured such that ambient air that passes through the inlet aperture, then passes over said at least part of the prime mover arrangement for cooling one or more electrical components thereof.

2. The working machine of claim 1, wherein the inlet aperture extends through an external surface of the sidewall, wherein an angle between normals of the external surface and a ground plane of the working machine is in the range of 75 to 105 degrees; optionally, wherein the external surface is substantially perpendicular to the ground plane.

3. The working machine of claims 1 or 2, wherein the sidewall is substantially parallel to a forward travelling direction of the working machine and/or a longitudinal axis of the working arm and/or wherein the sidewall is substantially perpendicular to a ground plane of the working machine.

4. The working machine of any preceding claim, wherein the enclosure projects laterally from the sidewall with respect to a forward travelling direction of the working machine.

5. The working machine of any preceding claim, wherein the inlet aperture is adjacent to, or below, the working arm when the working arm is in its lowest position; optionally, wherein the working arm comprises an upper wall and a lower wall connected by two opposed arm sidewalls, and wherein the inlet aperture is adjacent to, or below, one of the arm sidewalls when the working arm is in its lowest position; optionally wherein the inlet aperture comprises a grill for inhibiting debris ingress to the enclosure.

6. The working machine of any preceding claim, wherein at least part of the enclosure is mounted to the sidewall and/or wherein said at least part of the prime mover arrangement is mounted to the sidewall.

7. The working machine of any preceding claim, further comprising a duct within the enclosure configured to direct ambient air that passes through the inlet aperture towards said at least part of the prime mover arrangement.

8. The working machine of any preceding claim, wherein the enclosure comprises a first outlet aperture, wherein ambient air that passes through the inlet aperture, passes over said at least part of the prime mover arrangement, and then through the first outlet aperture; optionally, wherein the first outlet aperture comprises a grill for inhibiting debris ingress to the enclosure, optionally wherein the first outlet aperture extends through an external surface of the enclosure, wherein an angle between normals of the external surface and a ground plane of the working machine is in the range of 90 to 180 degrees; optionally wherein the first outlet aperture extends through an external surface of the enclosure, wherein an angle between a normal of the external surface and a forward travelling direction of the working machine is in the range of 90 to 180 degrees.

9. The working machine of claim 8, wherein the enclosure comprises a wheel housing for a ground engaging wheel of the ground engaging propulsion structure, and wherein the wheel housing comprises the first outlet aperture; optionally wherein the first outlet aperture faces the ground engaging wheel, and wherein the working machine comprises a barrier, such as a fender, interposed between the first outlet aperture and the ground engaging wheel for shielding the first outlet aperture from ground spray.

10. The working machine of claim 8 or 9, wherein ambient air that passes through the inlet aperture, over said at least part of the prime mover arrangement, and through the first outlet aperture, travels along a substantially linear path, optionally wherein the working machine further comprises a second outlet aperture in the machine body and spaced from the enclosure, wherein ambient air that passes through the inlet aperture, then passes over at least part of the prime mover arrangement, and then through the second outlet aperture.

11. The working machine of claim 10, wherein the sidewall comprises an opening spaced from the inlet aperture, and wherein ambient air that passes through the inlet aperture, passes through said opening and then through the second outlet aperture; optionally wherein part of the prime mover arrangement (e.g. an electric motor) extends through said opening.

12. The working machine of any preceding claim, further comprising at least one blower within the enclosure configured to force ambient air towards said at least part of the prime mover arrangement; optionally wherein the at least one blower is adjacent the inlet aperture, and is selectively controllable so as to blow air out of the enclosure via the inlet aperture for blowing debris off a grill covering the inlet aperture.

13. The working machine of any preceding claim, wherein said at least part of the prime mover arrangement comprises one or more inverters housed within an inverter housing, and wherein ambient air that passes through the inlet aperture, passes through the inverter housing for cooling the one or more inverters and/or wherein said at least part of the prime mover arrangement comprises at least one heatsink connected to at least one electrical component, such as an inverter, and wherein ambient air that passes through the inlet aperture, passes over said at least one heatsink; optionally, wherein the prime mover arrangement comprises at least two heatsinks, each connected to at least one electrical component of the prime mover arrangement, and wherein said at least two heatsinks are arranged in parallel with respect to a flow path of ambient air that passes through the inlet aperture, and over said at least part of the prime mover arrangement.

14. The working machine of any preceding claim, wherein ambient air that passes through the inlet aperture cools one or more of the following electrical components of the prime mover arrangement: one or more inverters; one or more electric motors; one or more electric pumps; and one or more power distribution units.

15. The working machine of any preceding claim, wherein the enclosure comprises:
an access port for accessing the prime mover arrangement; and
a hatch movable relative to the access port between open and closed positions for respectively opening and closing the access port,
wherein the hatch inhibits precipitation ingress to the enclosure via the access port when in the closed position.
